Europäisches Patentamt

European Patent Office

Office européen des brevets

(11) Veröffentlichungsnummer: **0 535 727 B1**

(12) **EUROPÄISCHE PATENTSCHRIFT**

(45) Veröffentlichungstag der Patentschrift: **02.11.95**

(21) Anmeldenummer: **92202867.5**

(22) Anmeldetag: **18.09.92**

(51) Int. Cl.6: **C22B 1/16**, C22B 1/20

(54) **Verfahren zum Sintern von eisenoxidhaltigen Stoffen auf einer Sintermaschine.**

(30) Priorität: **03.10.91 DE 4132877**
**25.01.92 DE 4202054**
**13.06.92 DE 4219491**

(43) Veröffentlichungstag der Anmeldung:
**07.04.93 Patentblatt 93/14**

(45) Bekanntmachung des Hinweises auf die
Patenterteilung:
**02.11.95 Patentblatt 95/44**

(84) Benannte Vertragsstaaten:
**AT BE DE ES FR GB IT LU NL PT SE**

(56) Entgegenhaltungen:
**AU-A- 500 466      DE-A- 2 000 132**
**DE-A- 2 434 722      DE-A- 2 841 629**
**DE-B- 1 201 558      US-A- 2 672 412**

**PATENT ABSTRACTS OF JAPAN vol. 3, no.
83 (C-052)18. Juli 1979; & JP-A-54061004
(NIPPON STEEL)**

**PATENT ABSTRACTS OF JAPAN vol. 2, no.
15 (C-2)31. Januar 1978; & JP-A-52116702
(NIPPON STEEL)**

(73) Patentinhaber: **METALLGESELLSCHAFT Aktiengesellschaft**
**Postfach 10 15 01,**
**Reuterweg 14**
**D-60015 Frankfurt (DE)**

(72) Erfinder: **Stieler, Fred**
**Breslauer Strasse 22**
**W-6056 Heusenstamm (DE)**
Erfinder: **Magedanz, Norbert, Dr.**
**Heinrich-Hofmann-Strasse 23 1/2**
**W-6467 Hasselroth (DE)**
Erfinder: **Gerlach, Walter**
**Vilbeler Landstrasse**
**W-6000 Frankfurt am Main 60 (DE)**
Erfinder: **Otto, Jürgen**
**Taunusstrasse 107**
**W-6382 Friedrichsdorf (DE)**
Erfinder: **Hirsch, Martin**
**Römerstrasse 7**
**W-6382 Friedrichsdorf (DE)**
Erfinder: **Cappel, Fred, Dr.**
**Schopenhauer Strasse 13**
**W-6072 Dreieich (DE)**
Erfinder: **Schlebusch, Detlev, Dr.**
**Erlenweg 2**
**W-6362 Wöllstadt 2 (DE)**

Rank Xerox (UK) Business Services
(3.10/3.09/3.3.3)

**PATENT ABSTRACTS OF JAPAN vol. 2, no. 15 (C-2)31. Januar 1978 & JP-A-52116703 (NIPPON STEEL)**

Erfinder: **Schmidt, Hermann**
**Vorderste Weide 18**
**W-6350 Bad Nauheim (DE)**
Erfinder: **Weisel, Heiko**
**Gartenstrasse 7**
**W-6301 Staufenberg 1 (DE)**
Erfinder: **Werz, Hans-Joachim**
**Alpenroder Strasse 21**
**W-6230 Frankfurt am Main 80 (DE)**

**Beschreibung**

Die Erfindung betrifft ein Verfahren zum Sintern von eisenoxidhaltigen Stoffen auf einer Sintermaschine, wobei eine festen Brennstoff enthaltende Sintermischung auf die Sintermaschine aufgegeben wird, die Oberfläche der Sintermischung gezündet wird, sauerstoffhaltige Gase durch die Sintermischung geleitet werden, ein Teil des Abgases nach einer Aufstärkung durch Zugabe von sauerstoffreicheren Gasen als sauerstoffhaltiges Kreislaufgas zurückgeführt und der andere Teil des Abgases als Restgas abgeführt wird.

Das Sintern von eisenoxidhaltigen Stoffen, insbesondere von Eisenerzen oder Eisenerzkonzentraten, erfolgt auf Sintermaschinen. Die Sintermischung, bestehend aus dem Eisenerz, Rückgut, festem Brennstoff und Zuschlägen, wird auf die Sintermaschine chargiert und der Brennstoff an der Oberfläche des Materialbettes unter dem Zündofen gezündet. Anschließend wird Luft durch das Sinterbett gesaugt und die Sinterfront wandert von oben nach unten durch das Sinterbett. Aus den Windkästen unter dem Obertrum der Sintermaschine wird das Abgas in die Gassammelleitung gesaugt und nach einer Reinigung in die Atmosphäre geleitet. Der Sintervorgang erfordert eine Wärmeübertragung zwischen dem heißen Verbrennungsgas und dem kalten Feststoff. Feststoffmengen und Luftmengen sind wärmeäquivalent. Dieser Wärmetausch erfordert große Luftmengen und damit Abgasmengen. Der Luftsauerstoff wird nur zum Teil verbraucht. Außerdem enthält das Abgas verdampftes Wasser aus der Sintermischung, $CO_2$ aus der Verbrennung des Brennstoffes und aus Kalzinationsvorgängen, Schwefeloxide aus der Verbrennung von Schwefel - hauptsächlich aus dem zugesetzten Koks oder Kohle - CO aus unvollständiger Verbrennung, verschiedene andere gasförmige Produkte und Falschluft sowie Luft, die an den Seitenwänden der Rostwagen zwischen der Beschickung ungenutzt in das Abgas gelangt.

Weiterhin führt das Abgas Staub mit sich. Die Abgasmenge beträgt etwa 1000 $Nm^3/t$ Sintermischung oder etwa 1.000.000 $Nm^3/h$ für eine 400 $m^2$-Sintermaschine.

Der Sintervorgang erfolgt aufgrund der durch die Beschickung gesaugten Luft in dünnen horizontalen Schichten der Beschickung und wandert mit der Brennfront von oben nach unten durch die Beschickung, so daß der Sinter aus einem sehr porösen Material besteht. Wenn diese Sinterkonfiguration erhalten bleiben soll, darf der Sintervorgang nicht geändert werden, wie es z.B. beim Schmelzen erfolgen würde, und damit ist das große Abgasvolumen eine der Voraussetzungen für den Sintervorgang.

Eine gewisse Verringerung des Abgasvolumens kann durch Verminderung der Falschluftmenge erzielt werden.

Weiterhin wurde vorgeschlagen, das heiße Abgas der letzten Saugkästen auf den vorderen Teil der Sintermaschine zurückzuführen. Dadurch kann die Abgasmenge um bis zu etwa 40% verringert werden ("Stahl und Eisen" 99 (1979), Heft 7, Seite 327/333; AIME, Iron Making Conference Proceedings, Vol. 38, Detroit, Mi., 1979, Seite 104/111).

Aus der JP-A-52 116 703 ist ein Sinterverfahren bekannt, bei dem kein Abgas in die Atmosphäre geleitet wird. Dazu wird der Sauerstoffgehalt des Sintergases vor dem Eintritt in das Beschickungsbett durch Zugabe von Sauerstoff erhöht und entweder das gesamte Abgas oder ein Teil in einen Hochofen geleitet und der andere Teil im Kreislauf geführt. Wenn das gesamte Abgas in den Hochofen geleitet wird, muß der Sauerstoffgehalt im Gas vor dem Eintritt in das Beschickungsbett über 30% liegen und die angesaugte Gasmenge beträgt max. etwa 650 $Nm^3/t$ Sinter und fällt mit steigendem Sauerstoffgehalt ab. Wenn nur ein Teilstrom des Abgases in den Hochofen geleitet und der andere Teil als Sinterabgas im Kreislauf geführt wird, beträgt die max. zulässige angesaugte Gasmenge bei einem Sauerstoffgehalt von 17% ebenfalls 650 $Nm^3/t$ Sinter und optimal 500 $Nm^3/t$. Mit steigendem Sauerstoffgehalt fällt die angesaugte Gasmenge weiter ab. Mit diesen zulässigen Gasmengen wird jedoch ein schlechtes Sinterergebnis erzielt. Außerdem ist eine gasseitige Verbindung mit einem Hochofen sehr problematisch und der Sauerstoffverbrauch enorm.

Der Erfindung liegt die Aufgabe zugrunde, die Abgasmenge beim Sintern von eisenoxidhaltigen Stoffen in möglichst wirtschaftlicher Weise weitgehend zu vermindern und dabei eine gute Sinterqualität zu erhalten.

Die Lösung dieser Aufgabe erfolgt erfindungsgemäß bei dem eingangs geschilderten Verfahren dadurch, daß als Restgas nur eine Abgasmenge ausgeschleust wird, die dem während des Sinterprozesses gebildeten Gas plus dem zur Aufstärkung zugegebenen sauerstoffreicheren Gas plus der von außen eingedrungenen Falschluft minus dem verbrauchten Sauerstoff entspricht, der andere Teilstrom des Abgases als Kreislaufgas zurückgeführt und vor der Beaufschlagung der Sintermischung durch Zugabe von sauerstoffreicheren Gasen auf einen Sauerstoffgehalt von max. 24% aufgestärkt wird.

Sauerstoffreichere Gase sind Gase mit einem $O_2$-Gehalt, der höher ist als der $O_2$-Gehalt des Abgases. Als sauerstoffreichere Gase können Luft, sauerstoffangereicherte Luft oder technisch reiner Sauerstoff verwendet werden. Das während des Sinterprozesses gebildete Gas besteht hauptsächlich aus $CO_2$ und

3

CO, die durch Verbrennung von Kohlenstoff gebildet werden, aus Wasserdampf, der durch Verdampfung von in der Beschickung vorhandenem Wasser gebildet wird, und aus $SO_x$, das aus in der Beschickung vorhandenem Schwefel gebildet wird. Falschluft tritt insbesondere am Anfang und am Ende des Sinterbandes ein.

Außerdem kann Falschluft an den Schleifdichtungen zwischen Rostwagen und Dichtleisten eintreten. Ein Teil des Sauerstoffs wird durch die beim Sinterprozeß ablaufenden Oxidationsvorgänge verbraucht. Aus dem gesamten Abgas wird nur eine Gasmenge ausgeschleust, die den aus diesen Vorgängen resultierenden Gasvolumina entspricht, und das übrige Abgas wird als Kreislaufgas zurückgeführt. Die in die Beschickung eingesaugte Gasmenge, bestehend aus dem rückgeführten Kreislaufgas plus dem zugemischten sauerstoffreicheren Gas, beträgt etwa 950 - 1200 $Nm^3$/t erzeugtem Sinter. Die Menge an $O_2$ im zugemischten Gas beträgt etwa 30 - 130 $Nm^3$/t erzeugtem Sinter. Die Menge des auszuschleusenden Restgases und die Menge des zuzusetzenden sauerstoffreicheren Gases erhöht sich mit fallendem $O_2$-Gehalt des zugesetzten sauerstoffreicheren Gases. Die auszuschleusende Menge ist bei der Verwendung von technisch reinem Sauerstoff am geringsten und bei der Verwendung von Luft am größten, da mit Luft die größte Menge an Stickstoff eingebracht wird und die von dem zugesetzten sauerstoffreicheren Gas in das Kreislaufgas eingebrachte Menge an Stickstoff als entsprechende Restgasmenge ausgeschleust werden muß. Die untere Grenze des $O_2$-Gehaltes im Sintergas - d.h. dem aufgestärkten Gas, das in die Beschickung der Sintermaschine strömt - liegt bei etwa 8%. Die Menge des ausgeschleusten Restgases beträgt je nach Arbeitsweise bis 600 $Nm^3$/t erzeugtem Sinter, wobei geringe Werte bei Verwendung von technisch reinem Sauerstoff und Ausschluß oder Verminderung der Falschluft sowie bei Kondensation von Wasserdampf und Auswaschen von $CO_2$ erzielt werden. Das Obertrum der Sintermaschine wird von einer Gashaube überdeckt, in die das Kreislaufgas geführt wird. Auch in den Zündofen kann Kreislaufgas geführt werden. Beim Anfahren wird zunächst Luft als Verbrennungsluft für den Zündofen und als Sintergas verwendet, eine den vorstehend angeführten Kriterien entsprechende Menge Abgas als Restgas abgeführt und das verbleibende Abgas als Kreislaufgas zurückgeführt.

Die Vorteile der Erfindung bestehen darin, daß die Abgasmenge beträchtlich verringert wird, ihre Reinigung dadurch wesentlich verbilligt und verbessert wird und trotzdem ein Sintergut mit sehr guten Eigenschaften erzeugt wird.

Eine Ausgestaltung besteht darin, daß die Aufstärkung des Kreislaufgases auf einen Sauerstoffgehalt von 16 bis 22% erfolgt. Dieser Bereich ergibt gute Betriebsergebnisse bei einer Steigerung der Sinterleistung gegenüber der üblichen Sinterleistung ohne Sauerstoffanreicherung der Sinterluft.

Eine Ausgestaltung besteht darin, daß die Aufstärkung des Kreislaufgases auf einen Sauerstoffgehalt von 18 bis 21% erfolgt. Dieser Bereich ergibt sehr gute Betriebsergebnisse bei einer Steigerung der Sinterleistung gegenüber der üblichen Sinterleistung.

Eine Ausgestaltung besteht darin, daß die Aufstärkung des Kreislaufgases auf einen Sauerstoffgehalt von 10 bis 16% erfolgt. Dieser Bereich ergibt gute Betriebsergebnisse bei unveränderter Sinterleistung gegenüber der üblichen Sinterleistung, und der Sauerstoffverbrauch wird verringert, da weniger Sauerstoff im Restgas ausgeschleust wird.

Eine Ausgestaltung besteht darin, daß in der Gashaube für das rückgeführte Kreislaufgas über der Sintermischung ein konstanter Druck nahe dem atmosphärischen Druck eingestellt und durch Regelung der Menge des ausgeschleusten Restgases konstant gehalten wird. Der Ausdruck "möglichst nahe dem Atmosphärendruck" bedeutet geringer Unterdruck bis geringer Überdruck gegenüber dem atmosphärischen Druck. Dadurch wird das Eindringen von Falschluft verhindert oder minimiert und die ausgeschleuste Menge an Restgas entspricht immer den vorstehend geschilderten Kriterien.

Eine vorzugsweise Ausgestaltung besteht darin, daß die der Sintermischung zugegebene Menge an festem Brennstoff entsprechend der Verbrennungswärme des im Kreislaufgas zurückgeführten CO verringert wird. Trotz des hohen Sauerstoffüberschusses im Kreislaufgas, bezogen auf den Kohlenstoff in der Sintermischung, kann das Abgas CO in Mengen bis zu mehreren Prozenten enthalten. Entsprechend dem Heizwert des CO-Gehaltes wird die Menge des üblicherweise in die Sintermischung eingesetzten Kokses verringert. Die dadurch erzielte Einsparung an Koks kann bis zu 20% betragen. Dadurch wird auch der $SO_x$-Gehalt im Abgas entsprechend verringert, da der Schwefel hauptsächlich mit dem Koks eingebracht wird.

Eine Ausgestaltung besteht darin, daß die Menge des Restgases durch Auskondensieren von $H_2O$ und/oder Auswaschen von $CO_2$ und/oder Einbinden von Schwefel durch Kalkzugabe verringert wird. Die Kondensation von Wasser und das Auswaschen von $CO_2$ erfolgt im Abgas. Das Einbinden von Schwefel erfolgt durch Zugabe von CaO oder $Ca(OH)_2$ in die Sintermischung oder auf das Beschickungsbett. Dadurch wird die auszuschleusende Menge an Restgas verringert.

Eine Ausgestaltung besteht darin, daß das Kreislaufgas zur Verhinderung der Unterschreitung des $H_2SO_4$-Taupunktes aufgeheizt wird. Dadurch wird ein Unterschreiten des $H_2SO_4$-Taupunktes und Auftreten

von Korrosionen mit Sicherheit vermieden, falls die Temperatur des Gases nahe dem Taupunkt liegt.

Eine Ausgestaltung besteht darin, daß beim Auskondensieren von $H_2O$ aus dem Restgas zunächst der Taupunkt des Gases durch Wassereinspritzen erhöht wird und dann durch indirekte Kühlung die Auskondensation erfolgt.

Eine Ausgestaltung besteht darin, daß das Kreislaufgas vor der Rückführung grob entstaubt und der abgeschiedene Staub in die Sintermischung zurückgeführt wird. Die grobe Entstaubung erfolgt in mechanischen Entstaubern wie in Zyklonen oder Multiklonen. Die Entstaubung kann für das gesamte Abgas gemeinsam, nur für das Kreislaufgas oder getrennt für das Kreislaufgas und das Restgas erfolgen. Dadurch werden die Gasleitungen geschont und die Feinreinigung des Restgases entlastet.

Eine Ausgestaltung besteht darin, daß an den Stirnseiten der Gashaube Kreislaufgas als Sperrgas verwendet wird. Unter dem Anfang und dem Ende der Gashaube sind unter dem Obertrum Sperrgas-Windkästen angeordnet, die über dem Beschickungsbett in der Gashaube einen leichten Überdruck bewirken. Dadurch strömt eine geringe Menge an Kreislaufgas als Sperrgas durch den Spalt zwischen Oberfläche des Beschickungsbettes und Unterkante der Stirnwand der Gashaube. Auf diese Weise wird ein Eindringen von Falschluft an den Stirnseiten vermieden.

Eine Ausgestaltung besteht darin, daß das Abgas zur Entfernung von gasförmigen Schadstoffen und Feststoffen in einer zirkulierenden Wirbelschicht mit festen Sorptionsmitteln bei Temperaturen unter 150°C, vorzugsweise bei 80 bis 60°C behandelt wird. Als Sorptionsmittel werden hauptsächlich CaO, Ca(OH)$_2$, CaCO$_3$ und Dolomit eingesetzt. Das System der zirkulierenden Wirbelschicht besteht aus einem Wirbelschichtreaktor, einem Abscheider zum Abscheiden von Feststoff aus der aus dem Wirbelschichtreaktor ausgetragenen Suspension - im allgemeinen einem Rückführzyklon - und einer Rückführleitung für den abgeschiedenen Feststoff in den Wirbelschichtreaktor. Die Mischtemperatur von Abgas und Sorptionsmittel im Wirbelschichtreaktor wird, falls das Abgas nicht bereits mit einer entsprechenden Temperatur anfällt, durch Zugabe von Wasser in den Wirbelschichtreaktor eingestellt. Die Gasgeschwindigkeit im Wirbelschichtreaktor wird auf 1-10 m/sec, vorzugsweise 2-5 m/sec, eingestellt. Die mittlere Suspensionsdichte im Wirbelschichtreaktor beträgt 0,1 - 100 kg/m$^3$, vorzugsweise 1 - 5 kg/m$^3$. Die mittlere Teilchengröße des Sorptionsmittels beträgt 1 - 100 $\mu$m, vorzugsweise 5 - 20 $\mu$m. Die Menge des stündlichen Sorptionsmittelumlaufs beträgt mindestens das Fünffache der Im Schacht des Wirbelschichtreaktors befindlichen Sorptionsmittelmenge, vorzugsweise das Dreißig- bis Hundertfache. Bei der Abkühlung im Wirbelschichtreaktor wird die Mischtemperatur 5 - 30°C über dem Wassertaupunkt gehalten. Der Wasserdampfpartialdruck im Wirbelschichtreaktor wird entsprechend auf 15 - 50 Vol.-% Wasserdampf, vorzugsweise 25 - 40 Vol.-%, eingestellt. Das Sorptionsmittel kann als trockener Feststoff oder als wäßrige Suspension in den Wirbelschichtreaktor aufgegeben werden. Die Sorption in dem Wirbelschichtreaktor kann bei gleichzeitiger Anwesenheit eines Stützbettes aus Feststoffen mit einer mittleren Teilchengröße von 100 - 500 $\mu$m durchgeführt werden, wenn die mittlere Teilchengröße des zugegebenen Sorptionsmittels klein ist. Das Prinzip der zirkulierenden Wirbelschicht zeichnet sich dadurch aus, daß im Unterschied zur "klassischen" Wirbelschicht, bei der eine dichte Phase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Staubraum ist nicht vorhanden, jedoch nimmt innnerhalb des Reaktors die Feststoffkonzentration von unten nach oben ständig ab. Aus dem oberen Teil des Reaktors wird eine Gas-Feststoff-Suspension ausgetragen. Bei der Definition von Betriebsbedingungen über die Kennzahlen von Froude und Archimedes ergeben sich die Bereiche:

$$0,1 \leq 3/4 \cdot Fr^2 \cdot \frac{\rho g}{\rho k - \rho g} \leq 10 ,$$

bzw.

$$0,01 \leq Ar \leq 100 ,$$

EP 0 535 727 B1

wobei

$$Ar = \frac{d_k^3 \cdot g \, (\rho k - \rho g)}{\rho g \cdot \nu^2} \quad \text{und}$$

$$Fr^2 = \frac{u^2}{g \cdot d_k}$$

sind.

Es bedeuten:

u     die relative Gasgeschwindigkeit in m/sec.

Ar     die Archimedes-Zahl

Fr     die Froude-Zahl

$\rho$g     die Dichte des Gases in $kg/m^3$

$\rho$k     die Dichte des Feststoffteilchens in $kg/m^3$

$d_k$     den Durchmesser des kugelförmigen Teilchens in m

$\nu$     die kinematische Zähigkeit in $m^2/sec.$

g     die Gravitationskonstante in $m/sec.^2$

Die Behandlung des Abgases in der zirkulierenden Wirbelschicht kann in der Weise erfolgen, daß das gesamte Abgas, nur das Kreislaufgas, nur das Restgas oder Kreislaufgas und Restgas separat behandelt werden. Die Behandlung in der zirkulierenden Wirbelschicht erfolgt insbesondere zur Entfernung eines großen Teiles des $SO_x$-Gehaltes und des Staubes. Das aus der zirkulierenden Wirbelschicht abgezogene, beladene Sorptionsmittel wird in die Sintermischung zurückgeführt. Bei der Sinterung erfolgt zwar wieder eine teilweise Verflüchtigung, jedoch wird der größte Teil im Sinter eingebunden und damit aus dem Kreislauf ausgeschleust. Durch die Sorption in der zirkulierenden Wirbelschicht wird in relativ einfacher und sicherer Weise eine Anreicherung des $SO_x$-Gehaltes im Kreislaufgas vermieden und eine weitgehende Entfernung von $SO_x$ aus dem Restgas erzielt. Außerdem erfolgt eine weitgehende Entstaubung. Falls erforderlich, kann das Restgas einer Feinentstaubung, z.B. in einer elektrostatischen Gasreinigung, unterworfen werden.

Eine Ausgestaltung besteht darin, daß das Restgas aus Windkästen abgezogen wird, die unter dem Anfang der Sintermaschine angeordnet sind. Es wurde festgestellt, daß die Beladung des Abgases mit verschiedenen Schadstoffen am Beginn des Sinterbandes wesentlich geringer ist als im Abgas der nachfolgenden Strecke des Sinterbandes, weil am Anfang des Sinterbandes die Beschickung mindestens in den unteren Schichten noch feucht ist und dadurch durch Adsorption, Absorption und Filtration Schadstoffe sehr wirksam festhält. Erst im weiteren Verlauf des Sinterprozesses werden die so in der Beschickung akkumulierten Schadstoffe dann mit hoher Konzentration in das Kreislaufgas getrieben und mit diesem wieder auf die Beschickung zurückgeführt. Solche Schadstoffe sind sowohl gasförmig, wie z.B. $SO_2$, $SO_3$, HCl und HF, oder dampfförmig, wie z.B. NE-Metalle und NE-Metallverbindungen, als auch staubförmig, wie z.B. Chloride und Fluoride. Der Anteil der gasförmigen Schadstoffe in dem am Beginn des Sinterbandes abgezogenen Restgas - bezogen auf den gesamten Gehalt dieser Schadstoffe im gesamten Abgas des Sinterbandes - nimmt in der obigen Reihenfolge ab. Wenn Dioxine oder Furane im Abgas vorhanden sind, dürfte dies im Abgas am Beginn des Sinterbandes ebenfalls nur in sehr geringen Mengen vorhanden sein und weitgehend in das Kreislaufgas gelangen, mit diesem auf die Beschickung zurückgeführt werden und beim Durchgang durch die Brennfront der Beschickung zerstört werden. Durch den Abzug des Restgases am Beginn des Sinterbandes wird also ein auszuschleusendes Gas erhalten, das entweder nach Abscheidung des Staubgehaltes direkt in die Atmosphäre geleitet werden kann oder dessen Reinigung von Schadstoffen relativ einfach ist. Die Anzahl der Windkästen bzw. Länge des Sinterbandes, aus dem das Restgas abgezogen wird, wird so gewählt, daß die jeweils auszuschleusende Restgasmenge dort anfällt. Im allgemeinen fällt die Restgasmenge auf einer Länge des Sinterbandes von 10 bis 50% der gesamten Länge an. Der Staubgehalt im Abgas der ersten Windkästen besteht fast ausschließlich aus Grobstaub, so daß die Abscheidung bereits mit Zyklonen oder Multiklonen erfolgen kann. Feinstaub entsteht im Sinterprozeß

6

vorwiegend durch Sublimation der gasförmig aus der Brennzone der Sintermischung austretenden Chloride, insbesondere der Alkalichloride. Dieser Feinstaub wird im Anfangsbereich des Sinterbandes durch die Filterwirkung der noch feuchten unteren Schichten der Beschickung weitgehend in der Beschickung abgeschieden. Der Staubgehalt im Kreislaufgas wird bei der Rückführung weitgehend im Sinterbett abgeschieden bzw. an den großen Oberflächen der porigen Sinterstruktur angelagert und damit aus dem Kreislauf entfernt, so daß eine Entstaubung des Kreislaufgases sehr vereinfacht wird. $SO_2$ muß zur Verhinderung der Anreicherung im Kreislaufgas aus diesem entfernt werden. Dies kann durch Zugabe von Calcium enthaltenden Stoffen wie $Ca(OH)_2$ oder CaO zur Beschickung selbst erfolgen oder durch Entfernung von $SO_2$ im Kreislaufgas außerhalb der Beschickung.

Eine Ausgestaltung besteht darin, daß auf einer beträchtlichen Länge des Sinterbandes, in die Kreislaufgas zurückgeführt wird, eine Calcium- und/oder Magnesium-Hydroxide und/oder Oxide enthaltende Lösung auf die Oberfläche gesprüht wird. Besonders geeignet sind wäßrige Lösungen, die $Ca(OH)_2$ enthalten. $SO_2$ wird in der Beschickung abgebunden. Die Länge der Beschickung, in die die schwefelbindenden Stoffe auf die Oberfläche gesprüht werden, und die Menge der schwefelbindenden Stoffe richtet sich nach den jeweiligen Verfahrensbedingungen und kann empirisch ermittelt werden. Als schwefelbindende Stoffe können Abfallstoffe verwendet werden, die auf diese Weise entsorgt werden. Diese Ausgestaltung ermöglicht eine einfache und wirtschaftliche Entfernung von $SO_2$ aus dem Kreislaufgas.

Eine Ausgestaltung besteht darin, daß auf das Sinterband eine Rostbelag-Schicht aufgegeben wird, die mit einer Lösung aus Calcium- und/oder Magnesium-Hydroxiden und/oder Oxiden befeuchtet ist. Auch auf diese Weise ist eine einfache und wirtschaftliche Entfernung von $SO_2$ aus dem Kreislaufgas möglich.

Eine Ausgestaltung besteht darin, daß das Restgas aufgeheizt wird. Das am Angang der Sintermaschine entnommene Restgas hat eine relativ geringe Temperatur von ca. 50 - 80°C. Zur Vermeidung von Korrosion in den nachfolgenden Gebläsen erfolgt eine Aufheizung auf eine Temperatur, die eine nachfolgende Kondensation verhindert.

Eine Ausgestaltung besteht darin, daß das an der Stirnseite des Sinterbandes eintretende, Falschluft enthaltende Abgas aus dem ersten Windkasten oder dem ersten Teil des Windkastens in das Kreislaufgas geführt und das Restgas aus den folgenden Windkästen abgezogen wird. Dadurch wird erreicht, daß die Falschluft nicht sofort mit dem Restgas wieder ausgeschleust, sondern zur Aufstärkung des Sauerstoffgehaltes des Kreislaufgases ausgenutzt wird. Diese Arbeitsweise ist vorteilhaft, wenn die Aufstärkung des Sauerstoffgehaltes des Kreislaufgases mit Luft oder mit schwach sauerstoffangereicherter Luft erfolgt.

Eine Ausgestaltung besteht darin, daß das Restgas aus Windkästen des Sinterbandes abgezogen wird, in denen das Abgas hohe Konzentrationen an Schadstoffen enthält und diese aus dem Restgas entfernt werden. Dadurch wird ein Restgas erhalten, das die größte Menge der beim Sinterprozeß anfallenden Schadstoffe enthält, und die Entfernung der Schadstoffe kann in einem sehr kleinen Gasvolumen erfolgen. Auf diese Weise können z.B. NE-Metalle, insbesondere Zink und Blei bzw. deren Verbindungen, selektiv aus dem Abgas entfernt werden. Dies ist insbesondere vorteilhaft, wenn die Sintermischung Hüttenwerksreststoffe wie Konverterstäube, Stäube aus der Sinteranlage usw. enthält, da diese einen größeren Anteil an NE-Metallen aufweisen.

Eine Ausgestaltung besteht darin, daß ein Teilstrom des Kreislaufgases aus Windkästen des Sinterbandes abgezogen wird, in denen das Abgas hohe Konzentrationen an Schadstoffen enthält, die Schadstoffe aus dem Teilstrom entfernt werden und der Teilstrom in das Kreislaufgas zurückgeleitet wird. Auch auf diese Weise können die Schadstoffe aus einem relativ kleinen Abgasvolumen entfernt werden.

Die Erfindung wird anhand von Beispielen näher erläutert.

Die Beispiele beziehen sich auf eine 400 m$^2$ Sintermaschine mit folgenden Kenndaten:

| | |
|---|---|
| Sintererzeugung | 578,3 t/h |
| Sauerstoffverbrauch | 56,9 Nm$^3$/t Sinter |
| Wasserdampfbildung | 99,7 Nm$^3$/t Sinter |
| $CO_2$-Bildung | 79,3 Nm$^3$/t Sinter |
| CO im Abgas | 1% |

In der nachfolgenden Tabelle betrifft das Beispiel Nr. 0 eine übliche Sinterung mit Luft und die Beispiele 1 bis 6 die erfindungsgemäße Sinterung.

Die Beispiele 1 bis 3 zeigen die Verhältnisse bei unterschiedlichen $O_2$-Gehalten im Sintergas (aufgestärktes Kreislaufgas).

Beispiel 4 zeigt im Vergleich zu Beispiel 2 die Verhältnisse bei verringerter Falschluft.

Beispiel 5 zeigt im Vergleich zu Beispiel 4 die Verhältnisse bei einer Wasserdampfkondensation und $CO_2$-Wäsche im Abgas.

Beispiel 6 zeigt im Vergleich zu Beispiel 2 die Verhältnisse bei geringerem $O_2$-Gehalt des zugesetzten sauerstoffreicheren Gases.

| Beispiel - Nr. | 0 | 1 | 2 | 3 | 4 | 5 | 6 |
|---|---|---|---|---|---|---|---|
| Arbeitsweise | Übliche | gemäß Erfindung | | | | | |
| Angesaugte Gasmenge (Nm3/tSinter) | 1204,8 | 1069,6 | 1069,6 | 1069,6 | 1069,6 | 1069,6 | 1069,6 |
| O2 - Gehalt des Sintergases (%) | 21,0 | 15,0 | 18,0 | 21,0 | 18,0 | 18,0 | 18,0 |
| Falschluft (Nm3/tSinter) | 197,0 | 98,5 | 98,5 | 98,5 | 39,4 | 39,4 | 98,5 |
| (% der ursprünglichen Menge) | 100,0 | 50,0 | 50,0 | 50,0 | 20,0 | 20,0 | 50,0 |
| O2 - Gehalt des Zusatzgases (%) | - | 99,9 | 99,9 | 99,9 | 99,9 | 99,9 | 80,0 |
| H2O-Dampfkondensation & CO2-Wäsche | - | - | - | - | - | Ja | - |
| Abgasmenge (Nm3/tSinter) | 1.524,2 | 1.293,3 | 1.293,4 | 1.293,5 | 1.233,8 | 1.231,7 | 1.293,6 |
| Ausgeschleustes Gas (Nm3/tSinter) | 1.524,2 | 287,7 | 296,0 | 304,7 | 241,3 | 37,1 | 317,5 |
| (% der ursprünglichen Menge) | 100,0 | 18,9 | 19,4 | 20,0 | 15,8 | 2,4 | 20,8 |
| Kreislaufgas (Nm3/tSinter) | - | 1.005,6 | 997,4 | 988,8 | 992,5 | 1.015,6 | 976,1 |
| Zusammensetzung der Gasströme | | | | | | | |
| N2 (%) | 72,5 | 26,6 | 25,9 | 25,2 | 12,8 | 83,3 | 30,0 |
| O2 (%) | 15,5 | 9,6 | 12,1 | 14,5 | 11,7 | 13,7 | 12,1 |
| H2O (%) | 6,8 | 35,2 | 34,2 | 33,3 | 41,6 | 1,8 | 31,9 |
| CO2 (%) | 4,2 | 27,6 | 26,8 | 26,0 | 32,9 | 0,0 | 25,0 |
| CO (%) | 1,0 | 1,0 | 1,0 | 1,0 | 1,0 | 1,2 | 1,0 |
| Zusatzgasmenge (Nm3/tSinter) | - | 64,2 | 72,3 | 80,9 | 76,9 | 54,0 | 93,5 |
| O2 - Menge (Nm3/tSinter) | - | 64,1 | 72,2 | 80,8 | 76,8 | 53,9 | 74,8 |
| CO - Verlust (Nm3/tSinter) | 15,2 | 2,9 | 3,0 | 3,0 | 2,4 | 0,4 | 3,2 |

EP 0 535 727 B1

In den nachfolgenden Beispielen 7 bis 9 sind die Parameter für den Zusätz von Luft als sauerstoffreicheres Gas angegeben. Die Gasmengen sind in $Nm^3/t$ erzeugtem Sinter angegeben.

| Beispiel | | 7 | 8 | 9 |
|---|---|---|---|---|
| angesaugte Gasmenge | | 1165 | 1165 | 1165 |
| % $O_2$ im angesaugten Gas | | 12 | 14 | 16 |
| zugegebene $O_2$-Menge | | - | - | - |
| zugegebene Luftmenge | | 385,45 | 474,48 | 600 |
| Abgasmenge | | 1488,53 | 1489,4 | 1488,5 |
| auszuschleusende Menge | | 610,51 | 700,12 | 825,03 |
| % der ursprünglichen Menge | | 40,14 | 46,03 | 54,24 |
| Zusammensetzung des Abgases in %: | $O_2$ | 7,55 | 9,19 | 10,86 |
| | $H_2O$ | 16,38 | 14,14 | 12,0 |
| | $CO_2$ | 12,82 | 11,07 | 9,4 |
| | $N_2$ | 63,25 | 64,60 | 66,76 |
| | CO | 1,0 | 1,0 | 1,0 |
| $CO_2$ im angesaugten Gas in % | | 8,6 | 6,65 | 4,6 |
| $H_2O$ " " " | | 11,0 | 8,5 | 5,8 |
| $N_2$ " " " | | 68,5 | 70,46 | 73,1 |
| CO " " " | | 0,7 | 0,6 | 0,5 |

Wie aus den Beispielen hervorgeht, bestehen folgende Gesetzmäßigkeiten:

1. bei gleichem $O_2$-Gehalt im Sintergas
   a) steigt die Menge an Restgas mit fallendem $O_2$-Gehalt im zugesetzten sauerstoffreicheren Gas
   b) steigt die zuzusetzende $O_2$-Menge pro t erzeugtem Sinter mit steigendem $O_2$-Gehalt im zugesetzten sauerstoffreicheren Gas
2. bei gleicher Menge an Restgas
   steigt die zuzusetzende $O_2$-Menge pro t erzeugtem Sinter mit steigendem $O_2$-Gehalt im zugesetzten sauerstoffreicheren Gas und steigendem $O_2$-Gehalt im Sintergas
3. bei gleichem $O_2$-Gehalt im zugesetzten sauerstoffreicheren Gas
   fällt die Menge des Restgases und die zuzusetzende $O_2$-Menge pro t erzeugtem Sinter mit fallendem $O_2$-Gehalt im Sintergas
4. bei gleichem Zusatz von $O_2$
   erhöht sich die Menge des Restgases mit steigendem $O_2$-Gehalt im Sintergas und fallendem $O_2$-Gehalt im zugesetzten sauerstoffreicheren Gas.

In den nachfolgenden Beispielen 10 und 11 wird Bezug auf die Beispiele 3 und 7 genommen.

9

EP 0 535 727 B1

Beispiel 10:

Die ausgeschleuste Restgasmenge betrug 304,7 Nm$^3$/t Sinter. Diese Gasmenge wird auf 12% der Länge des Sinterbandes abgezogen, gerechnet vom Anfang der Saugstrecke.

Das Restgas enthielt 7,1% der im gesamten Abgas anfallenden $SO_2$-Menge und 2,6% der im gesamten Abgas anfallenden Chloride.

Beispiel 11:

Die ausgeschleuste Restgasmenge betrug 610,51 Nm$^3$/t Sinter. Diese Gasmenge wird auf 36% der Länge des Sinterbandes abgezogen, gerechnet vom Anfang der Saugstrecke. Das Restgas enthielt 14,2% der im gesamten Abgas anfallenden $SO_2$-Menge und 9,1% der im gesamten Abgas anfallenden Chloride.

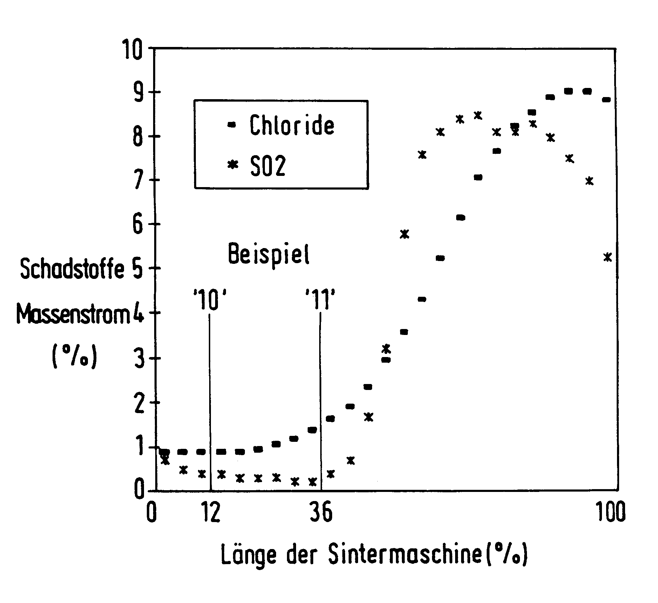

In der Figur ist die Verteilung des Massenstroms des $SO_2$ und der Chloride für einen Betriebsfall dargestellt. Jeder Meßpunkt zeigt den prozentualen Anteil der Schadstoffe in dem jeweiligen Windkasten der Sintermaschine bezogen auf den gesamten Anfall der Schadstoffe (100%) im gesamten Abgas.

**Patentansprüche**

1. Verfahren zum Sintern von eisenoxidhaltigen Stoffen auf einer Sintermaschine, wobei eine festen Brennstoff enthaltende Sintermischung auf die Sintermaschine aufgegeben wird, die Oberfläche der Sintermischung gezündet wird, sauerstoffhaltigere Gase durch die Sintermischung geleitet werden, ein Teil des Abgases nach einer Aufstärkung durch Zugabe von sauerstoffreicheren Gasen als sauerstoffhaltiges Kreislaufgas zurückgeführt und der andere Teil des Abgases als Restgas abgeführt wird, dadurch gekennzeichnet, daß als Restgas nur eine Abgasmenge ausgeschleust wird, die dem während des Sinterprozesses gebildeten Gas plus dem zur Aufstärkung zugegebenen sauerstoffreicheren Gas plus der von außen eingedrungenen Falschluft minus dem verbrauchten Sauerstoff entspricht, der andere Teilstrom des Abgases als Kreislaufgas zurückgeführt und vor der Beaufschlagung der Sintermischung durch Zugabe von sauerstoffreicheren Gasen auf einen Sauerstoffgehalt von max. 24% aufgestärkt wird.

2. Verfahren nach Anspruch 1, dadurch gekennzeichnet, daß die Aufstärkung des Kreislaufgases auf einen Sauerstoffgehalt von 16 bis 22% erfolgt.

3. Verfahren nach Anspruch 2, dadurch gekennzeichnet, daß die Aufstärkung des Kreislaufgases auf einen Sauerstoffgehalt von 18 bis 21% erfolgt.

4. Verfahren nach Anspruch 1, dadurch gekennzeichnet, daß die Aufstärkung des Kreislaufgases auf einen Sauerstoffgehalt von 10 bis 16% erfolgt.

5. Verfahren nach einem der Ansprüche 1 bis 4, dadurch gekennzeichnet, daß in der Gashaube für das rückgeführte Kreislaufgas über der Sintermischung ein konstanter Druck nahe dem atmosphärischen Druck eingestellt und durch Regelung der Menge des ausgeschleusten Restgases konstant gehalten wird.

6. Verfahren nach einem der Ansprüche 1 bis 5, dadurch gekennzeichnet, daß die der Sintermischung zugegebene Menge an festem Brennstoff entsprechend der Verbrennungswärme des im Kreislaufgas zurückgeführten CO verringert wird.

7. Verfahren nach einem der Ansprüche 1 bis 6, dadurch gekennzeichnet, daß die Menge des Restgases durch Auskondensieren von $H_2O$ und/oder Auswaschen von $CO_2$ und/oder Einbinden von Schwefel durch Kalkzugabe verringert wird.

8. Verfahren nach einem der Ansprüche 1 bis 7, dadurch gekennzeichnet, daß das Kreislaufgas zur Verhinderung der Unterschreitung des $H_2SO_4$-Taupunktes aufgeheizt wird.

9. Verfahren nach Anspruch 7, dadurch gekennzeichnet, daß beim Auskondensieren von $H_2O$ aus dem Restgas zunächst der Taupunkt des Gases durch Wassereinspritzen erhöht wird und dann durch indirekte Kühlung die Auskondensation erfolgt.

10

**10.** Verfahren nach einem der Ansprüche 1 bis 9, dadurch gekennzeichnet, daß das Kreislaufgas vor der Rückführung grob entstaubt und der abgeschiedene Staub in die Sintermischung zurückgeführt wird.

**11.** Verfahren nach einem der Ansprüche 1 bis 10, dadurch gekennzeichnet, daß an den Stirnseiten der Gashaube Kreislaufgas als Sperrgas verwendet wird.

**12.** Verfahren nach einem der Ansprüche 1 bis 11, dadurch gekennzeichnet, daß das Abgas zur Entfernung von gasförmigen Schadstoffen und Feststoffen in einer zirkulierenden Wirbelschicht mit festen Sorptionsmitteln bei Temperaturen unter 150°C, vorzugsweise bei 80 bis 60°C, behandelt wird.

**13.** Verfahren nach einem der Ansprüche 1 bis 12, dadurch gekennzeichnet, daß das Restgas aus Windkästen abgezogen wird, die unter dem Anfang der Sintermaschine angeordnet sind.

**14.** Verfahren nach Anspruch 13, dadurch gekennzeichnet, daß auf einer beträchtlichen Länge des Sinterbandes, in die Kreislaufgas zurückgeführt wird, eine Calcium- und/oder Magnesium-Hydroxide und/oder Oxide enthaltende Lösung auf die Oberfläche gesprüht wird.

**15.** Verfahren nach Anspruch 13, dadurch gekennzeichnet, daß auf das Sinterband eine Rostbelag-Schicht aufgegeben wird, die mit einer Lösung aus Calcium- und/oder Magnesium-Hydroxiden und/oder Oxiden befeuchtet ist.

**16.** Verfahren nach einem der Ansprüche 13 bis 15, dadurch gekennzeichnet, daß das Restgas aufgeheizt wird.

**17.** Verfahren nach einem der Ansprüche 13 bis 16, dadurch gekennzeichnet, daß das an der Stirnseite des Sinterbandes eintretende, Falschluft enthaltende Abgas aus dem ersten Windkasten oder dem ersten Teil des Windkastens in das Kreislaufgas geführt und das Restgas aus den folgenden Windkästen abgezogen wird.

**18.** Verfahren nach einem der Ansprüche 1 bis 12, dadurch gekennzeichnet, daß das Restgas aus Windkästen des Sinterbandes abgezogen wird, in denen das Abgas hohe Konzentrationen an Schadstoffen enthält und diese aus dem Restgas entfernt werden.

**19.** Verfahren nach einem der Ansprüche 1 bis 17, dadurch gekennzeichnet, daß ein Teilstrom des Kreislaufgases aus Windkästen des Sinterbandes abgezogen wird, in denen das Abgas hohe Konzentrationen an Schadstoffen enthält, die Schadstoffe aus dem Teilstrom entfernt werden und der Teilstrom in das Kreislaufgas zurückgeleitet wird.

**Claims**

**1.** A method for sintering iron oxide-containing substances on a sintering machine, in which a sinter mix containing solid fuel is charged on to the sintering machine, the surface of the sinter mix is ignited, gases containing more oxygen are passed through the sinter mix, a portion of the exhaust gas after fortification by the addition of gases richer in oxygen is recycled as oxygen-containing recycle gas and the other portion of the exhaust gas is removed as residual gas, characterised in that only a quantity of exhaust gas which corresponds to the gas formed during the sintering process plus the gas richer in oxygen added for fortification plus the infiltrated air which has penetrated from the outside minus the spent oxygen is discharged as residual gas, the other partial stream of the exhaust gas is recycled as recycle gas and before acting on the sinter mix is fortified to an oxygen content of at most 24% by the addition of gases richer in oxygen.

**2.** A method according to Claim 1, characterised in that the fortification of the recycle gas is effected to an oxygen content of 16 to 22%.

**3.** A method according to Claim 2, characterised in that the fortification of the recycle gas is effected to an oxygen content of 18 to 21%.

EP 0 535 727 B1

4. A method according to Claim 1, characterised in that the fortification of the recycle gas is effected to an oxygen content of 10 to 16%.

5. A method according to one of Claims 1 to 4, characterised in that a constant pressure close to atmospheric pressure is set in the gas hood for the recycled recycle gas above the sinter mix and said pressure is kept constant by controlling the rate of the residual gas discharged.

6. A method according to one of Claims 1 to 5, characterised in that the quantity of solid fuel added to the sinter mix is reduced corresponding to the heat of combustion of the CO recycled in the recycle gas.

7. A method according to one of Claims 1 to 6, characterised in that the quantity of the residual gas is reduced by condensing out $H_2O$ and/or washing out $CO_2$ and/or binding in sulphur by the addition of lime.

8. A method according to one of Claims 1 to 7, characterised in that the recycle gas is heated to prevent its temperature dropping to below the $H_2SO_4$ dew point.

9. A method according to Claim 7, characterised in that when condensing $H_2O$ out of the residual gas first of all the dew point of the gas is increased by injecting water and then the condensing out is effected by indirect cooling.

10. A method according to one of Claims 1 to 9, characterised in that the recycle gas before recycling is subjected to rough dust removal and the dust which has been separated off is recycled into the sinter mix.

11. A method according to one of Claims 1 to 10, characterised in that recycle gas is used as barrier gas on the end faces of the gas hood.

12. A method according to one of Claims 1 to 11, characterised in that exhaust gas is treated with solid sorbents at temperatures below 150 °C, preferably at 80 to 60 °C, in a circulating fluidised bed in order to remove gaseous pollutants and solids.

13. A method according to one of Claims 1 to 12, characterised in that the residual gas is withdrawn from wind boxes which are located beneath the start of the sintering machine.

14. A method according to Claim 13, characterised in that a solution containing calcium hydroxides and/or magnesium hydroxides and/or oxides is sprayed on to the surface over a considerable length of the sinter belt into which recycle gas is recycled.

15. A method according to Claim 13, characterised in that a sinter cake layer is charged on to the sinter belt, which layer is moistened with a solution of calcium hydroxides and/or magnesium hydroxides and/or oxides.

16. A method according to one of Claims 13 to 15, characterised in that the residual gas is heated.

17. A method according to one of Claims 13 to 16, characterised in that the exhaust gas containing infiltrated air which enters at the end face of the sinter belt is passed out of the first wind box or the first portion of the wind box into the recycle gas and the residual gas is withdrawn from the following wind boxes.

18. A method according to one of Claims 1 to 12, characterised in that the residual gas is withdrawn from wind boxes of the sinter belt in which the exhaust gas contains high concentrations of pollutants, and these are removed from the residual gas.

19. A method according to one of Claims 1 to 17, characterised in that a partial stream of the recycle gas is withdrawn from wind boxes of the sinter belt in which the exhaust gas contains high concentrations of pollutants, the pollutants are removed from the partial stream and the partial stream is recycled into the recycle gas.

12

**Revendications**

1. Procédé pour le frittage de matériaux contenant de l'oxyde ferrique sur une machine de frittage, dans lequel on applique un mélange de frittage contenant du combustible solide sur la machine de frittage, on allume la surface du mélange de frittage, on guide des gaz contenant de l'oxygène à travers le mélange de frittage, on recycle sous forme d'un gaz de recyclage contenant de l'oxygène une partie de l'effluent de gaz après un renforçage par addition de gaz plus riches en oxygène et on évacue l'autre partie de l'effluent de gaz sous forme de gaz résiduaire, caractérisé en ce que, comme gaz résiduaire, on écluse seulement une quantité de l'effluent de gaz qui correspond au gaz qui s'est formé au cours du processus de frittage plus le gaz plus riche en oxygène ajouté à des fins de renforçage plus l'air parasite qui s'est introduit depuis l'extérieur moins l'oxygène consommé, l'autre courant partiel de l'effluent de gaz étant recyclé sous forme de gaz de recyclage et renforcé avant l'admission du mélange de frittage par addition de gaz plus riches en oxygène pour obtenir une teneur en oxygène de maximum 24%.

2. Procédé selon la revendication 1, caractérisé en ce que le renforçage du gaz de recyclage a lieu pour obtenir une teneur en oxygène de 16 à 22%.

3. Procédé selon la revendication 2, caractérisé en ce que le renforçage du gaz de recyclage a lieu pour obtenir une teneur en oxygène de 18 à 21%.

4. Procédé selon la revendication 1, caractérisé en ce que le renforçage du gaz de recyclage a lieu pour obtenir une teneur en oxygène de 10 à 16%.

5. Procédé selon l'une quelconque des revendications 1 à 4, caractérisé en ce que, dans la hotte pour les gaz, pour le gaz de recyclage recyclé, à travers le mélange de frittage, on règle une pression constante proche de la pression atmosphérique et on la maintient constante par réglage de la quantité du gaz résiduaire éclusé.

6. Procédé selon l'une quelconque des revendications 1 à 5, caractérisé en ce qu'on diminue la quantité de combustible solide ajouté au mélange de frittage en fonction de la chaleur de combustion du CO recyclé dans le gaz de recyclage.

7. Procédé selon l'une quelconque des revendications 1 à 6, caractérisé en ce qu'on diminue la quantité du gaz résiduaire par l'élimination de $H_2O$ par condensation et/ou par l'élimination de $CO_2$ par lavage et/ou par la liaison du soufre par addition de chaux.

8. Procédé selon l'une quelconque des revendications 1 à 7, caractérisé en ce qu'on chauffe le gaz de recyclage pour empêcher le sous-dépassement du point de rosée du $H_2SO_4$.

9. Procédé selon la revendication 7, caractérisé en ce que, lors de l'élimination de $H_2O$ hors du gaz résiduaire par condensation, on élève d'abord le point de rosée du gaz en introduisant de l'eau par injection et on procède ensuite à l'élimination par condensation à l'aide d'un refroidissement indirect.

10. Procédé selon l'une quelconque des revendications 1 à 9, caractérisé en ce qu'on procède à un dépoussiérage grossier du gaz de recyclage avant le recyclage et on recycle la poussière séparée dans le mélange de frittage.

11. Procédé selon l'une quelconque des revendications 1 à 10, caractérisé en ce que, sur les côtés frontaux de la hotte pour les gaz, on utilise du gaz de recyclage comme gaz d'arrêt.

12. Procédé selon l'une quelconque des revendications 1 à 11, caractérisé en ce qu'on traite l'effluent de gaz pour éliminer des polluants gazeux et des substances solides dans un lit fluidisé en circulation avec des agents de sorption solides à des températures inférieures à 150°C, de préférence de 80 à 60°C.

13. Procédé selon l'une quelconque des revendications 1 à 12, caractérisé en ce qu'on expulse le gaz résiduaire hors de boîtes à tuyères qui sont disposées en dessous du début de la machine de frittage.

**14.** Procédé selon la revendication 13, caractérisé en ce que, sur une longueur considérable de la grille d'agglomération dans laquelle on recycle le gaz de recyclage, on pulvérise sur la surface une solution contenant des hydroxydes et/ou des oxydes de calcium et/ou de magnésium

**15.** Procédé selon la revendication 13, caractérisé en ce qu'on applique, sur la grille d'agglomération, une couche de revêtement de la grille qui est imprégnée avec une solution d'hydroxydes et/ou d'oxydes de calcium et/ou de magnésium.

**16.** Procédé selon l'une quelconque des revendications 13 à 15, caractérisé en ce qu'on chauffe le gaz résiduaire.

**17.** Procédé selon l'une quelconque des revendications 13 à 16, caractérisé en ce que l'effluent de gaz qui pénètre du côté frontal de la grille d'agglomération et qui contient de l'air parasite est guidé depuis la première boîte à tuyères ou depuis la première partie de la boîte à tuyères dans le gaz de recyclage et le gaz résiduaire est expulsé des boîtes à tuyères ultérieures.

**18.** Procédé selon l'une quelconque des revendications 1 à 12, caractérisé en ce que le gaz résiduaire est expulsé hors des boîtes à tuyères de la grille d'agglomération, dans lesquelles l'effluent de gaz contient des polluants à des concentrations élevées et on élimine ces derniers du gaz résiduaire.

**19.** Procédé selon l'une quelconque des revendications 1 à 17, caractérisé en ce qu'on expulse un courant partiel du gaz de recyclage hors de boîtes à tuyères de la grille d'agglomération, dans lesquelles l'effluent de gaz contient des polluants à des concentrations élevées, on élimine les polluants hors du courant partiel et on recycle le courant partiel dans le gaz de recyclage.